# EUROPEAN PATENT APPLICATION

(11) **EP 1 862 922 A1**
(43) Date of publication of application: **05.12.2007**
(21) Application number: 07109355.3
(22) Date of filing: 31.05.2007
(51) Int. Cl.: G06F 17/30

(54) **System and method for searching web services and generating a search index**

(30) Priority: 01.06.2006 US 445431
(71) Applicant: SAP AG, 69190 Walldorf (DE)
(72) Inventor: Degenkolb, Marko, Wiesloch 69168 (DE); Halbedel, Ralf, Heidelberg 69115 (DE); Zurmuehl, Martin, Mühlhausen 69242 (DE)
(74) Representative: Richardt, Markus Albert

(57) **Abstract**

The present invention relates to a method of generating a search index (140; 620) for searching web services (648), a Web services Description Language (WSDL) documents (624) being stored for each of the web services (152; 648) and in addition to the WSDL document further unstructured descriptive information (626) being stored for at least some of the web services, the method comprising:
- reading the WSDL documents,
- reading the descriptive information,
- generating the search index (140; 620) using the WSDL documents and the descriptive information.

## Description

### Technical field

The present invention relates to a method of generating a search index for searching web services, a method for searching web services, a data processing system and a computer program product.

### Background

Web services often help create compatibility and interoperability among various packaged and customized web applications in a standardized and vendor-neutral manner. Web services may be economical and beneficial when used in an enterprise-level business scenario that combines the functionality of multiple applications into easy-to-use enterprise services. Such a business scenario may require a services-oriented architectural approach. Enterprise services may expose the functionality and data of applications so that they can be accessed by any service user.

Often, these web services may be referenced in a Universal Description, Discovery, and Integration (UDDI) repository. To locate a desired web service, the user determines or guesses particular taxonomies or ontologies used by the web service and the potential values for such taxonomies. For example, version 1 of UDDI supported three built-in standard taxonomies: the NAICS taxonomy of industry codes; the UN/SPSC taxonomy of products & services; and a geographical taxonomy of location codes based on ISO 3166, while version 2 implemented an external validation taxonomy. More generally, taxonomies and ontologies may help capture syntax and semantics of the particular web service. Without these restrictions or requirements, results from the query may be incomplete or fail to include the desired web service.

W02004/061703 A1 discloses a system and method for automating the web service selection based on reputation information to help negotiate a contractual web service binding between a client and a server. Thereby, reputation information may be schematized into behavioral attributes such as web service responsiveness, web service latency, web service uptime, cost data, business solvency etc. A client queries a search engine, which returns a ranked list of web services, with the ranking being based on reputation scores computed for each web service as collected by an auditor.

There is however the problem, that standard search criteria (like taxonomies as described above) are often not well suited in order to provide a widespread and profound listing regarding available web services. This also drastically reduces the value of reputation information provided for web services, since the amount of web services is rather restricted to available search engine database resources and therewith incomplete.

### Summary

The present invention provides a method of generating a search index for searching web services, a web services description language (WSDL) document being stored in a local registry for each of the web services and further descriptive information being stored for at least some of the web services in the local registry, the method comprising reading the WSDL documents, reading the descriptive information and generating the search index using the WSDL documents and the descriptive information.

The method of generating a search index according to the invention has the advantage, that a search index is not only generated using WSDL documents generally provided by web service providers, but also using additional descriptive information which is helpful to locate a certain web service. Such kind of descriptive information may thereby comprise technical information, business information, manuals, web pages in general relating to a given web service, articles published on the internet and any kind of unstructured data relating to a given web service.

This has two major advantages: the first advantage is that a search regarding a special web service is not limited by an insufficient amount of information regarding the given web service. This is especially important if for example natural language processing has to be performed in order to search for a certain web service. While typically, WSDL documents comprise metadata and technical information regarding a certain web service, descriptive information related to such web service can significantly broaden and complete the description of a web service from various points of view. For example, from a business point of view it becomes much more easy to locate a certain web service, and it will also significantly simplify the search for a web service for persons not skilled in the art. Such a person not skilled in the art typically does not know special technical descriptions and terms comprised in WSDL documents, such that it would be almost impossible for such a person to locate a certain service. With the additional descriptive information linked with respective WSDL documents, the probability that such a person not skilled in the art can find a respective web service using non-technical terms is significantly enhanced.

The second major advantage of generating a search index according to the invention is, that in case after a successful location of a certain web service this web service is used by a service consumer, which requires reading of the web services' respective WSDL document, the amount of data transferred from a service provider to the service consumer by transferring said WSDL document can be kept to a minimum. The reason is, that said WSDL document does not need to comprise large amounts of data exceeding the amount of information required by the service consumer in order to successfully use said web service. Any additional information which is not required by the service consumer to use the web service can be stored as descriptive information in further databases. However, since while generating the search index for searching web services, such kind of descriptive information is read additionally with the WSDL documents, it is still possible to receive complete search results with respect to said web service based on respective search queries. Reducing the amount of data comprised in WSDL documents therewith significantly enhances the latency time regarding a request for a certain web service, as well significantly reduces the amount of data transferred from the service provider to the service consumer.

In accordance with an embodiment of the invention, the WSDL documents comprise only data necessary for the interoperability of the respective web service with a service consumer data processing system. This means, that the information comprised in the WSDL documents is limited to minimum information absolutely necessary to run a respective web service on the service consumer data processing system. Therewith, such minimum information can for example comprise information regarding the input/output interface of the web service in order to allow for a binding of the web service to the service consumer data processing system.

In accordance with an embodiment of the invention, the WSDL documents are comprised in a Universal Description, Discovery and Integration (UDDI) registry. Using a UDDI registry has the advantage, that UDDI is already one of the core web services standards. It is the main registry for providing access to WSDL documents describing the protocol bindings and message formats required to interact with web services listed in its directory.

In accordance with an embodiment of the invention, the descriptive information comprise meta data. Using meta data has the advantage, that this allows to facilitate the understanding, use and management of data in general. Such kind of metadata can comprise for example information regarding a web service functionality, interoperability with application programs, availability, vendor or web service update frequency.

In accordance with an embodiment of the invention, reading of the WSDL documents and reading of descriptive information comprises reading the WSDL documents and the descriptive information from remote registries. Thereby, the WSDL documents and/or the descriptive information are read by means of web crawling techniques. This has the advantage, that by gathering information from multiple registries (databases) it is possible to obtain an index covering globally an extensive amount of information comprised in WSDL documents and descriptive information for web services.

In accordance with an embodiment of the invention, the method further comprising categorization of the web services based on a clustering of the information contained in the WSDL documents and the descriptive information. Such kind of clustering is for example known from US 2006/0242140 A1.

Clustering of information contained in WSDL documents and the descriptive information has the advantage, that this allows to effectively reduce typical high numbers of search results returned to a user using search engines only operating with a simple search index. Clustering allows to provide search results to a user with the search results being sorted in a way, that only results which are relevant in a particular case are provided to a user. Such clustering, or categorizing, may be used to characterize for example a certain web service with respect to an operating system the web service is designed for, or a certain service provider, or a certain kind of service (for example human resources, general administration, financial accounting etc).

In accordance with an embodiment of the invention, the search index comprises references to the WSDL documents, logical locations of respective web services and the descriptive information stored for at least some of the web services. This has the advantage, that using the search index for a search for a certain web service, the web service can be located in a quick manner. A logical location of a web service can be for example the URL or IP-address of a given web service.

In accordance with an embodiment of the invention, the method further comprises identifying the descriptive information being stored in a remote database for at least some of the web services and storing at least a portion of the identified description information in the local registry. Thereby, the identification of the descriptive information being stored in the remote database is performed by means of web crawling techniques.

Also, identifying the descriptive information being stored in the remote database for at least some of the web services is performed during a generation of a proxy, the proxy being adapted to store at least some of the descriptive information of said web services. This has the advantage, that the local database is dynamically updated with new information comprised in external (remote) databases with respect to new or updated web services. Therewith, a user is provided the possibility to search for recently published, recently modified or generally highly actual web services using highly actual resources. This becomes especially important, if for example such resources also include newspapers which for example recently reported the development of a new web service. In this case, by using such an electronic format of a newspaper as descriptive information and indexing the descriptive information, it is possible to provide a user with an actual and comprehensive search tool.

In accordance with an embodiment of the invention, the method further comprises receiving a manual registration of a web service, the manual registration comprising receiving manual input of information related to said web service in the local registry, the information comprising the web services description language (WSDL) document and the further descriptive information of said web service. In another embodiment, the method further comprises receiving automatically a registration of a web service, the receiving of the registration being performed by means of an application program interface (API), the registration comprising receiving input of information related to said web service in the local registry, the information comprising the web services description language (WSDL) document and the further descriptive information of said web service.

By either receiving a manual registration of a web service or by receiving automatically a registration of a web service, a web service provider is provided a tool to publish an updated or new web service by himself to an entity providing the possibility according to the invention to generate a search index with its respective local registry. This ensures that a service provider is able to provide potential business clients the possibility to locate a newly developed or updated web service.

In another aspect, the invention relates to a method for searching web services, the method comprising receiving a search query for searching a web service, the search query being received from a client, and performing a search for identifying web services, the identification being based on the query and the search index, the search index being provided according to the method of generating a search index for searching web services according to the invention.

In accordance with an embodiment of the invention, the query comprises an unstructured query comprising a wildcard character. This has the advantage, that a search does not only have to be performed knowing exactly the phrasing of a term provided with the query for the search, but also allows the search engine to try out multiple variations using said wildcard character as known in the art.

In accordance with an embodiment of the invention, the query is received by means of a graphical user interface, the graphical user interface being adapted in a service consumption editor and/or a web browser and/or an applet. Such a service consumption editor may be for example an Eclipse editor, an SAP Workbench (SE80) editor or an SAP Visual Composer (VC) editor.

In accordance with an embodiment of the invention, the method further comprises providing a search result to the client, the search result comprising the identified web services. Thereby, the search results are provided to a client in a sorted fashion.

In accordance with an embodiment of the invention, the method further comprises providing information regarding a clustering of the identified web services to the client. Thereby, the method further comprises receiving search result filter rules from the client based on the information regarding the clustering of the identified web services. The search result is filtered based on the search result filter rules.

This has the advantage, that a high number of search results provided to a user can be intelligently and therewith significantly reduced. A user being interested only in a certain category of web services is able to limit the number of search results to said category which allows the user to more precisely and quickly locate a certain web service suitable for his purposes.

In accordance with an embodiment of the invention, the method further comprises determining a count of the identified web services and if the count is below a threshold, automatically identifying the variation of the query that results in a higher count of identified web services. This allows to provide a user in an intelligent way a possibility of varying automatically the query provided by a user to the search engine. This may be for example necessary, if a spelling error in the search query limits the number of identified web services significantly. Since in this example, a variation of the query to the correct spelling results in a significantly higher count of identified web services, this improves the accuracy of a search for a certain web service.

In another aspect, the invention relates to a data processing system, the data processing system being adapted to perform the method of generating a search index for searching web services according to the invention, as well as performing the method for searching web services according to the invention.

In another aspect, the invention relates to a computer program product comprising computer executable instructions to perform the method of generating a search index for searching web services according to the invention and the method for searching web services according to the invention.

The disclosure further provides various embodiments of systems and methods for managing and searching web services. In one embodiment, a method comprises receiving a query from a first client for one or more requested web services via a graphical user interface. The method further includes identifying at least one web service stored in a Universal Description, Discovery, and Integration (UDDI) registry based on the query and an index of web service metadata. Information associated with the one or more identified web services is then presented via the graphical user interface.

In another aspect of the disclosure, a method comprises identifying metadata associated with a particular web service and storing at least a portion of the identified metadata in a local service definition repository. At least a portion of the local service definition is then electronically communicated to an index associated with a web service search entity.

The foregoing example method- as well as other disclosed methods - may be computer implementable. Moreover, some or all of these aspects may be further included in respective systems and software for managing and searching web services. The details of these and other aspects and embodiments of the disclosure are set forth in the accompanying drawings and the description below. Features, objects, and advantages of the various embodiments will be apparent from the description, drawings, and claims.

### Brief description of the drawings

In the following preferred embodiments of the invention will be described in greater detail by way of example only making reference to the drawings in which:
- FIGURE 1: illustrates an example system for searching web services in accordance with one embodiment of the present disclosure;
- FIGURES 2A-B: illustrate more detailed example architectures for searching web services;
- FIGURE 3: is a flowchart illustrating an example method involving deploying a plurality of web services using the system of FIG. 1;
- FIGURE 4: is a flowchart illustrating an example method for populating a subindex, remote index, or other metadata repository using the system of FIG. 2B; and
- FIGURES 5A-B: illustrate example graphical user interfaces (GUls) for searching and for presenting web service search results as implemented by the application described in FIG. 1.
- FIGURE 6: shows a block diagram of an embodiment of a data processing system according to the invention.
- FIGURE 7: shows a flowchart of a method of generating a search index for searching web services, as well as for a method for searching web services based on the method of generating a search index for searching web services.
- FIGURE 8: shows a block diagram of an example of clustering of web services.

### Detailed description

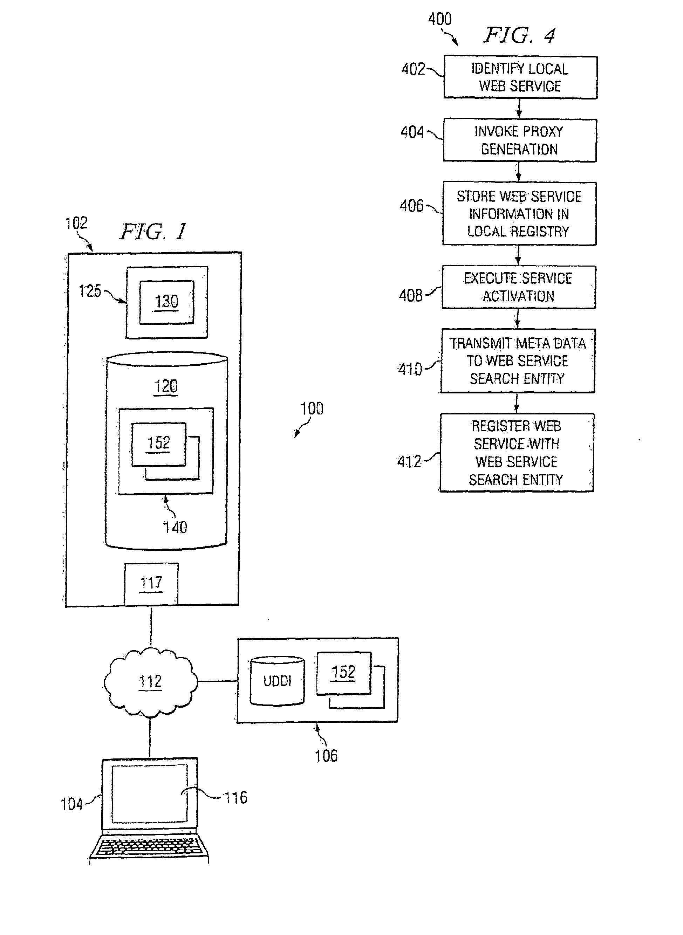

FIG. 1 illustrates an example system 100 for managing, providing, or allowing potentially unstructured searching or retrieval of web services 152, which are often described using Web Services Description Language (WSDL). Enterprises or other entities may more easily use web services 152 that can be centered on cross-platform integration. By constructing autonomous capabilities, enterprises can sever interdependencies between systems, applications, and services and target development efforts more effectively at business needs. More specifically, web services 152 may be searched by keyword (or other data or metadata) via a web registry service 130 offered by an Enterprise Registry (ER) provider 102. For example, this ER provider may offer the web registry service 130 as a separate web service or as a search engine or portal. Regardless of the particular implementation, this web registry service 130 includes, references, or utilizes a metadata index 140 that helps create, extend, or enhance searching of one or more Universal Description, Discovery, and Integration (UDDI) or other similar web service registries. Through this web registry service 130, a user need not be technical or knowledgeable of the internal structure of UDDI. Instead, the service may allow the user to provide search criteria in an unstructured way, thereby providing easier and more accurate search results matching the query. For example, the search may utilize prerequisite indexing of relevant meta-information of published web services 152. Common search engines may index various data sources in order to assign this metainformation to the published web services 152. In this case, data sources for technical meta-data (such as port type, stateful vs. stateless) as well as external data stores (such as online help documentation of the particular web service 152) can be indexed and assigned to the web service 152. As a result, the query can provide a combined result list, reflecting information from the assigned or dynamically determined data stores and their respective data sources. The result list can contain a prioritized and sorted list of web services 152, possibly corresponding to the importance and frequency of the matching query. Further, the web registry service 130 may provide the user with additional actions from the result list, such as "Did you mean" (in case of too few hits), "Best guess" (pick the most suitable one) can be used. Moreover, the web registry service 130 may allow the user to filter the result list according to any suitable parameters including the pre-defined data sources (e.g. web services of process component "Time Management"), security settings, user or business profiles, dynamically determined characteristics (location, known platform, etc.), and such.

System 100 is typically a distributed client/server system that spans one or more networks such as 112. As described above, rather than being delivered as packaged software, system 100 may represent a hosted solution that is developed or implemented by a first entity, while some or all of the web services 152 are developed by a second entity. Moreover, the processes or activities of the hosted solution may be distributed amongst these entities and their respective components. In such embodiments, data may be communicated or stored in an encrypted format such as, for example, using the TNG encryption algorithm. This encrypted communication may be between the user and the host or amongst various components of the host. But system 100 may be in a dedicated enterprise environment - across a local area network or subnet - or any other suitable environment without departing from the scope of this disclosure.

Turning to the illustrated embodiment, system 100 includes or is communicably coupled with ER provider 102, one or more clients 104, and one or more web service providers 106, at least some of which communicate across network 112. ER provider 102 may be any entity- including a person, group, organization, government agency, or enterprise- that provides some metadata index 140 that helps clients 104 locate or search on one or more web services 152 without necessarily using UDDI parameters. Thus, there is no need for the user to know the internal technical structure of the indexed WSDL documents. In fact, while various components and modules may be referred to as enterprise components or modules, it will be understood that this is for example purposes only and these components and modules may be implemented, requested, or executed by any suitable entity. Provider 102 typically includes some computer device such as a server (hereinafter referred to as server 102). Server 102 comprises an electronic computing device operable to receive, transmit, process and store data associated with system 100. For example, server 102 may be a Java 2 Platform, Enterprise Edition (J2EE)-compliant application server that includes Java technologies such as Enterprise JavaBeans (EJB), J2EE Connector Architecture (JCA), Java Messaging Service (JMS), Java Naming and Directory Interface (JNDI), and Java Database Connectivity (JDBC). But, more generally, FIG. 1 provides merely one example of computers that may be used with the disclosure. Each computer is generally intended to encompass any suitable processing device. For example, although FIG. 1 illustrates one server 102 that may be used with the disclosure, system 100 can be implemented using computers other than servers, as well as a server pool. Indeed, server 102 may be any computer or processing device such as, for example, a blade server, general-purpose personal computer (PC), Macintosh, workstation, Unix-based computer, or any other suitable device. In other words, the present disclosure contemplates computers other than general purpose computers as well as computers without conventional operating systems. Server 102 may be adapted to execute any operating system including Linux, UNIX, Windows Server, or any other suitable operating system. According to one embodiment, server 102 may also include or be communicably coupled with a web server that allows users to access various web or network functionality and/or a mail server.

Server 102 is also communicably coupled, directly or indirectly, with one or more web service providers 106. As described above, these providers 106 may be local or remote to server 102 (and may be owned or operated by the same entity) so long as they have one or more web services 152 deployed and operable to be searched. Web service 152 is operable to receive, decode, and respond to client requests. In general, a web service is a web-based application or software that interacts with other web applications via network 112 using open standards, i.e., publicly available standards. More specifically, each web service 152 may be a self-contained, modularized, executable entity (or a component exposed as a web service, such as Java components, remote function call (RFC) modules, and IDocs) that can be published, searched for, and accessed across network 112. For example, Simple Object Access Protocol (SOAP) and XML are current communication standards used in most web services. SOAP is a messaging protocol based on XML for accessing and promoting services on the World Wide Web. SOAP messages may be independent of operating systems used by system 100 and may be transmitted using a variety of Internet protocols, including Simple Mail Transfer Protocol (SMTP), Multipurpose Internet Mail Extensions (MIME), Hyper Text Transfer Protocol (HTTP), or any other suitable protocol. Though, web services 152 employing SOAP do not provide web pages over network 112 but instead share business logic, data, and processes through a programmatic interface across network 112. Regardless of the format, these web services 152 often include one or more web methods that perform a particular set of functionality.

Web services 152 are often deployed to users via an HTTP handler. This handler often uses a virtual URL that allows other users or clients 104 to access the particular web service 152. But, of course, providers 106 may use any other suitable method for web service deployment. For instance, the web services 152 may be provided through a framework used to describe web services interfaces in a UDDI repository. Business process management coordinates the activities of web services provided by business partners to manage processes across applications. In addition, web registry service 130 may support the WS-l Basic Profile, WSI-I Sample Applications, and WS-Security activities. In another implementation, providers 106 may each deploy one or more web services 152 using any suitable technique. For example, provider 106 may deploy an Internet Information Services (IIS)-based Web Service and generate a virtual root (vroot) on the particular web server running IIS. Then, to configure web service 152, provider 106 may create a configuration file for the particular service 152 and place it in the vroot along with the other files. This configuration file may provide various features such as compilation, security, globalization, and HTTP handler mappings.

Returning to server 102, it often includes or is coupled with memory 120. Memory 120 may include any memory or database module and may take the form of volatile or non-volatile memory including, without limitation, magnetic media, optical media, random access memory (RAM), read-only memory (ROM), removable media, or any other suitable local or remote memory component. Illustrated memory 120 includes ER 140, which includes or references one or more web services 152 (often using a classification service). But memory 120 may also include any other appropriate data such as VPN applications or services, firewall policies, a security or access log, print or other reporting files, HTML files or templates, data classes or object interfaces, unillustrated software applications or sub-systems, and others.

Illustrated web service metadata index 140 is any file, database, or other repository that includes parameters, pointers, variables, instructions, rules, links, or other data for easily providing information associated with or other logical structure of web services 152. For example, metadata index 140 may be a UDDI-based or other enterprise registry that contains or references definitions of web services 152 and associations to their metadata. In some embodiments, metadata index 140 may be formatted, stored, or defined as various data structures in extensible Markup Language (XML) documents, text files, Virtual Storage Access Method (VSAM) files, flat files, Btrieve files, comma-separated-value (CSV) files, internal variables, one or more libraries, or any other format capable of storing or presenting web services 152 and their respective web methods in an efficient or user friendly manner.

Server 102 also includes processor 125. Processor 125 executes instructions and manipulates data to perform the operations of server 102 such as, for example, a central processing unit (CPU), a blade, an application specific integrated circuit (ASIC), or a field-programmable gate array (FPGA). Although FIG. 1 illustrates a single processor 125 in server 102, multiple processors 125 may be used according to particular needs and reference to processor 125 is meant to include multiple processors 125 where applicable. In the illustrated embodiment, processor 125 executes web registry service 130.

At a high level, the web registry service 130 is operable to receive and/or process requests from users and present at least a subset of the results to the particular user via some interface. More specifically, web registry service 130 is any application, program, module, process, web service, or other software that helps in the management and searching of web services 152. For example, web registry service 130 may be a web service that is callable (or invokable) from any suitable website or software application. In another example, web registry service 130 may be a search engine or browser plugin that allows the user to query metadata index 140 from nearly anywhere in world. In a further example, the web registry service 130 may be a remote procedure called from a composite application with any number of portions that may be implemented as Enterprise Java Beans (EJBs) or with run-time implementations in different platforms, such as J2EE, ABAP (Advanced Business Application Programming) objects, or Microsoft's NET. In yet another example, web registry service 130 may instead present located web services 152 to users via an HTTP handler. This handler often uses a virtual URL that allows other users or clients 104 to access the particular web service 152.

Regardless of the particular implementation, "software" may include software, firmware, wired or programmed hardware, or any combination thereof as appropriate. Indeed, web registry service 130 may be written or described in any appropriate computer language including C, C++, Java, J#, Visual Basic, assembler, Perl, any suitable version of 4GL, as well as others. It will be understood that while web registry service 130 is illustrated in FIG. 1 as a single module that implements the various features and functionality through various objects, methods, or other processes, it may instead include a number of sub-modules, third party services respectively, libraries, and such as illustrated in FIG.s 2A-B. Further, while illustrated as internal to server 102, one or more processes associated with web registry service 130 may be stored, referenced, or executed remotely. For example, a portion of web registry service 130 may be a web service that is remotely called, while another portion of web registry service 130 may be an interface object bundled for processing at remote client 104. Moreover, web registry service 130 may be a child or sub-module of another software module or enterprise application (not illustrated) without departing from the scope of this disclosure.

Server 102 may also include interface 117 for communicating with other computer systems, such as clients 104, over network 112 in a client-server or other distributed environment. In certain embodiments, server 102 receives data from internal or external senders through interface 117 for storage in memory 120 and/or processing by processor 125. Generally, interface 117 comprises logic encoded in software and/or hardware in a suitable combination and operable to communicate with network 112. More specifically, interface 117 may comprise software supporting one or more communications protocols associated with communications network 112 or hardware operable to communicate physical signals. Interface 117 may allow communications across network 112 via a virtual private network (VPN), SSH (Secure Shell) tunnel, or other secure network connection.

Network 112 facilitates wireless or wireline communication between computer server 102 and any other local or remote computer, such as clients 104. Network 112 may be all or a portion of an enterprise or secured network. In another example, network 112 may be a VPN merely between server 102 and client 104 across wireline or wireless link. Such an example wireless link may be via 802.11 a, 802.11 b, 802.11 g, 802.20, WiMax, and many others. While illustrated as a single or continuous network, network 112 may be logically divided into various sub-nets or virtual networks without departing from the scope of this disclosure, so long as at least portion of network 112 may facilitate communications between server 102 and at least one client 104. In other words, network 112 encompasses any internal or external network, networks, subnetwork, or combination thereof operable to facilitate communications between various computing components in system 100. Network 112 may communicate, for example, Internet Protocol (IP) packets, Frame Relay frames, Asynchronous Transfer Mode (ATM) cells, voice, video, data, and other suitable information between network addresses. Network 112 may include one or more local area networks (LANs), radio access networks (RANs), metropolitan area networks (MANs), wide area networks (WANs), all or a portion of the global computer network known as the Internet, and/or any other communication system or systems at one or more locations. In certain embodiments, network 112 may be a secure network associated with the enterprise and certain local or remote clients 104.

Client 104 is any computing device operable to connect or communicate with server 102 or network 112 using any communication link. At a high level, each client 104 includes or executes at least GUI 116 and comprises an electronic computing device operable to receive, transmit, process and store any appropriate data associated with system 100. It will be understood that there may be any number of clients 104 communicably coupled to server 102. Further, "client 104," "developer," and "user" may be used interchangeably as appropriate without departing from the scope of this disclosure. Moreover, for ease of illustration, each client 104 is described in terms of being used by one user. But this disclosure contemplates that many users may use one computer or that one user may use multiple computers. As used in this disclosure, client 104 is intended to encompass a personal computer, touch screen terminal, workstation, network computer, kiosk, wireless data port, smart phone, personal data assistant (PDA), one or more processors within these or other devices, or any other suitable processing device. For example, client 104 may be a PDA operable to wirelessly connect with external or unsecured network. In another example, client 104 may comprise a laptop that includes an input device, such as a keypad, touch screen, mouse, or other device that can accept information, and an output device that conveys information associated with the operation of server 102 or clients 104, including digital data, visual information, or GUI 116. Both the input device and output device may include fixed or removable storage media such as a magnetic computer disk, CD-ROM, or other suitable media to both receive input from and provide output to users of clients 104 through the display, namely the client portion of GUI or application interface 116.

GUI 116 comprises a graphical user interface operable to allow the user of client 104 to interface with at least a portion of system 100 for any suitable purpose, such as viewing application or other transaction data. Generally, GUI 116 provides the particular user with an efficient and user-friendly presentation of data provided by or communicated within system 100. In certain cases, GUI 116 may facilitate the indexing of the service attributes and maintained taxonomies, including remotely linked information sources like documentation. As shown later, GUI 116 may comprise a plurality of customizable frames or views having interactive fields, pull-down lists, and buttons operated by the user. For example, GUI 116 may present a generic, standard, or propriety browser operable to manage and/or search web services 152. In another example, GUI 116 may be a portal that allows users to view, create, and manage enterprise services and generate or view historical and real-time reports. Of course, reports may be in any appropriate output format including PDF, HTML, and printable text. In yet another example, GUI 116 may be a front-end to a particular application, or embedded or integrated therein. Indeed, reference to GUI 116 may indicate a reference to the front-end or a component of web registry service 130, as well as the particular interface accessible via client 104, as appropriate, without departing from the scope of this disclosure. It should be understood that the term graphical user interface may be used in the singular or in the plural to describe one or more graphical user interfaces and each of the displays of a particular graphical user interface. Therefore, GUI 116 contemplates any graphical user interface, such as a generic web browser or touchscreen that processes information in system 100 and efficiently presents the results to the user. Server 102 can accept data from client 104 via the web browser (e.g., Microsoft Internet Explorer or Netscape Navigator) and return the appropriate HTML or XML responses to the browser using network 112.

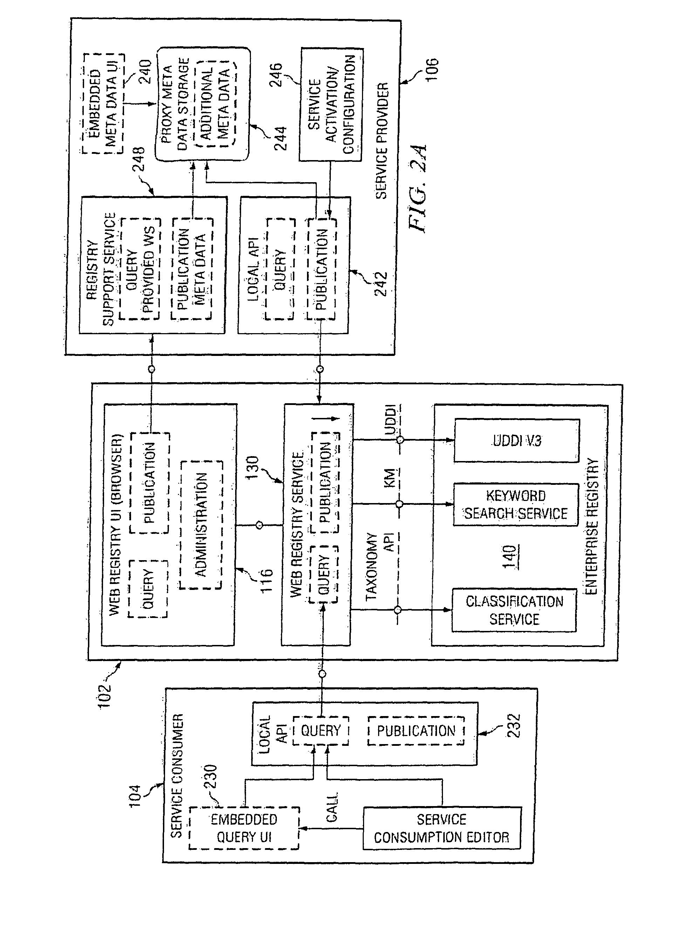

FIG.s 2 illustrate more detailed example architectures for searching web services. For example, FIG. 2A illustrates one modular architecture for an Enterprise Registry provider 102 to provide easy searching of web services 152 to a consumer 104, often using web registry service 130. In this example, ER provider 102 implements a web registry service 130 that includes a query sub-module and a publication sub-module. This web registry service 130 is communicably coupled with various repositories or logical categorizations within metadata index 140 (or enterprise registry), such as a classification service, a keyword search service, and UDDI (perhaps version 3). ER provider 102 may provide an interface or other remote access to this various functionality including publication, query, and administration. This functionality allows various users, such as web service provider 106, consumer 104, and a network or system administrator to utilize authorized services and repositories, including web registry service 130 and the enterprise registry 140. Accordingly, many of the users might execute (knowingly or not) more local APl_{S}, such as 232 and 242, that convert, supplement, support, or otherwise communicate data to server 102. Backends often use a local API that fits into the respective runtime environment (ABAP/Java) and that calls web registry service 130 (or an appropriate sub-module) to access the index 140. Typically, these APIs are linked or communicably coupled with various services, process, modules, or other relatively local software such as i) an embedded query UI 230 or service consumption editor in the case of consumer 104; and ii) registry support service 248, embedded metadata UI 240, proxy metadata or other local web service storage 244, and service activation/configuration 246 in the case of an associated or partnered web service provider 106. Each service definition may be published automatically (such as if it is marked as relevant) or manually by the publication UI. In the case of automatic registration, the service definitions may be registered during deploy-time and the service endpoints may be registered during configuration-time.

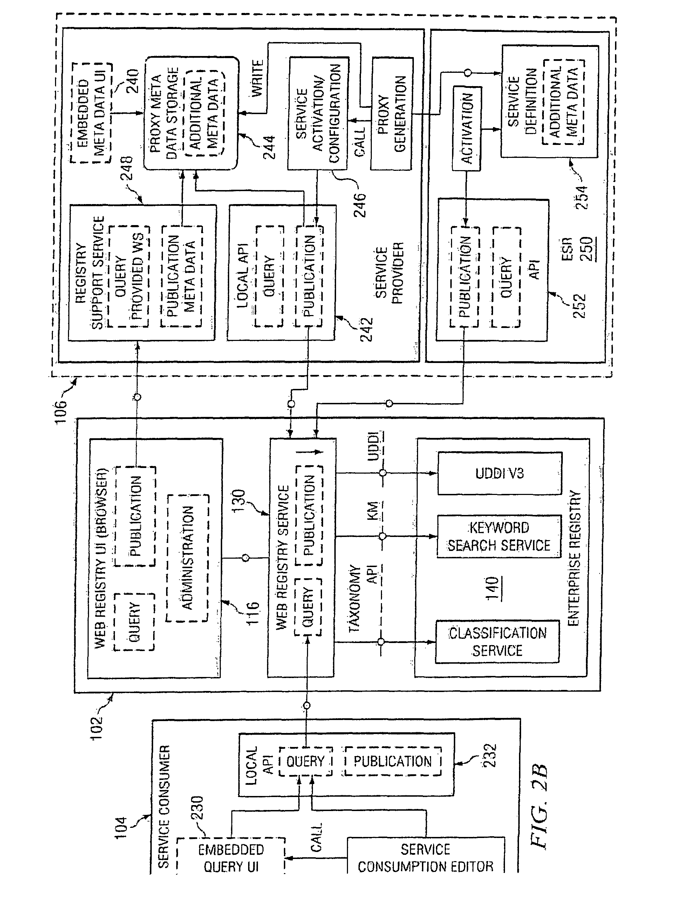

As shown in FIG. 2B, web registry service 130 may utilize additional metadata containing the classification data associated with the web services 152. The metadata can be stored in the backends as an extension to the already existing inbound proxy relevant metadata. This additional metadata may be maintained using a user interface embedded into the ABAP and Java IDE, the metadata may be filled during proxy-generation from ESR (Enterprise Service Repository) 244, or using any other suitable technique. This ESR 244 often acts as a repository for maintaining service definitions during design-time or otherwise stores the additional or local metadata. While not illustrated, the ESR can also be present at the consumer or customer 104 landscape. In this situation, the ESR service definitions can be published in addition to the ones of the provider systems. A reference between the provider system service definition and service definition may also be kept. In addition, the association of additional taxonomies (i.e. customer-defined) may also be possible after shipping/registration, by usage of the publication UI, which may provide the standard UDDI features and will be extended by special support for provider-specific taxonomies/categories. The added classification data per service definition may be persisted in UDDI.

It will be understood that while the preceding architectures describe various configurations of web registry service 130 and other software (such as index 140, Ul plug-ins, and so forth), they may instead be a standalone or relatively) simple software program integrated with other distributed modules or functionality. Moreover, each software component may locally include or be remotely linked with some or all of the illustrated components, as well as others not illustrated. In other words, regardless of the particular hardware or software architecture used, web registry service 130 is generally capable of allowing multiple users from one or more entities to search, deploy, discover, or otherwise manage web services 152 to, for example, execute various business processes and techniques. The following descriptions of flowcharts focus on the operation of web registry service 130 (or one of its components, sub-modules, or associated software) in performing one of the respective methods or processes. But system 100 contemplates using any appropriate combination and arrangement of logical elements implementing some or all of the described functionality.

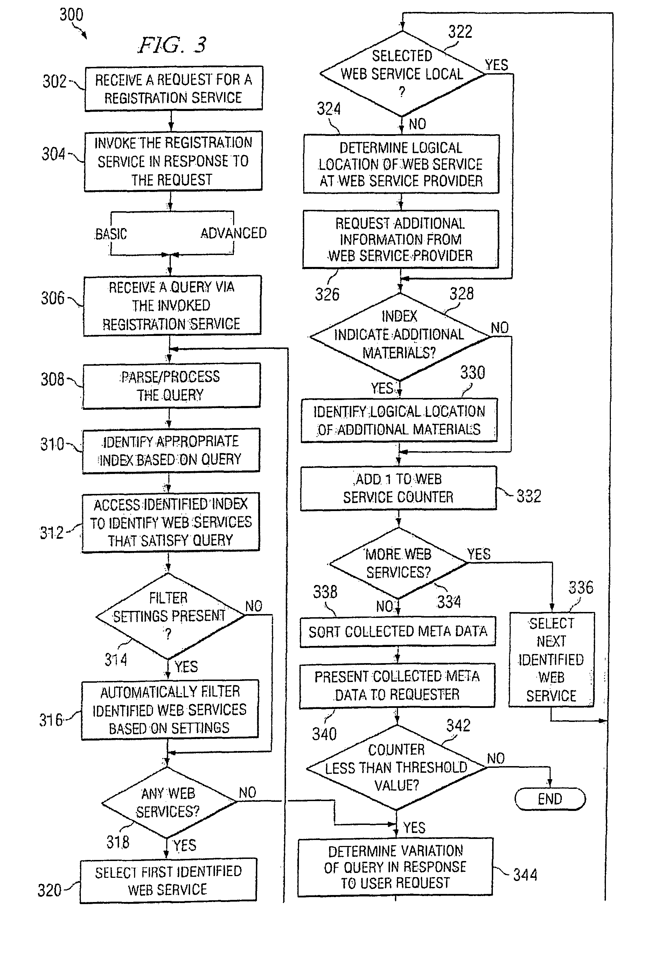

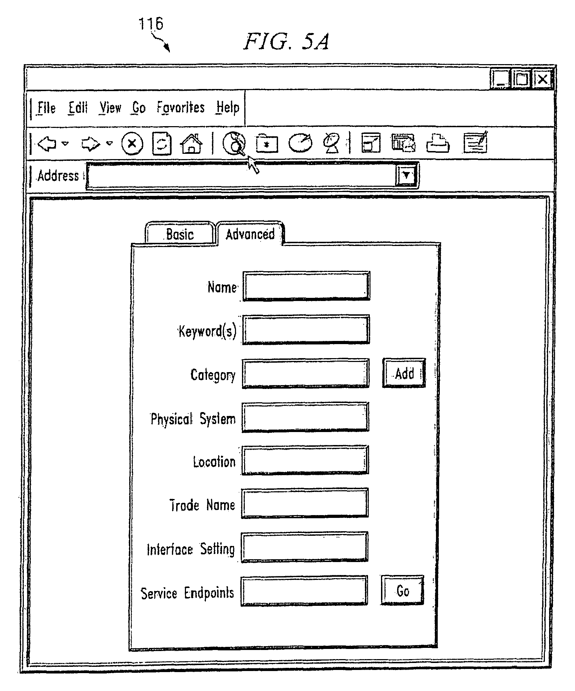

FIG. 3 is a flowchart illustrating an example method 300 involving searching web services 152 using web service metadata index 140. Illustrated method 300 begins at step 302, where ER provider 102 receives a request for web registry service 130. For example, this request may be a request for a web page via web server 102. In another example, this request may be a request for a web service that may be utilized within an application, web page, or other system of the requester 104 or an entity associated therewith (such as a customer or partner of the requester). In response to, and perhaps based on, the request, server 102 invokes or executes web registry service 130 at step 304. For example, server 102 may analyze the request to determine if client 104 requested a web service, a web page, or other such embodiment of web registry service 130. In another example, server 102 may automatically analyze client 104 to determine the better, more efficient, or more appropriate response. Regardless of the particular response, client 104 is typically presented with a GUI 116 that allows the user to select a basic search or an advanced search (such as that shown in FIG. 5A). In one implementation, the basic search may allow the user to input Boolean, natural language, or other search criteria. In another, the user may be able to select from a few of the more common input fields such as name, local vs. remote, and so forth. The advanced search may allow the user to provide more parameters to help limit or focus his search. For example, the user may be able to provide keywords that must be present, words that must not be present, and many others. In another embodiment, web registry service 130 may be called from an application executing on client 104. This application may automatically supply search parameters or other runtime variables, pass through the user's input, or otherwise provide information as appropriate without the knowledge of or hidden from the user. At any rate, web registry service 130 receives a query (potentially unstructured) at step 306 whether it is supplied by the user, by software running or communicating via client 104, or some combination thereof.

Once the query is received, web registry service 130 may parse the query as shown at step 308. This parsing may include identification of various data within the query, analysis of one or more profiles associated with client 104, determination of runtime parameters such as IP address, partnership status, requesting application, security or access settings, and many others as appropriate. Moreover, this query may be parsed in such as way as to make subsequent processing more efficient or cost effective. For example, as illustrated at example step 310, web registry service 130 may determine an appropriate metadata index 140 based on local/remote status of web services 152, location of client 104, or other of the dynamic or static parameters. But, of course, there may be only one index 140 that references or directs the request to child or distributed indices. Once the appropriate metadata index 140 is identified, web registry service 130 accesses the index 140 to identify web services 152 that satisfy the query using any suitable technique, such as SQL-like query, OODB-like processing, and so forth. If there are one or more filter settings for the particular requestor, his company or entity, role, or other associated characteristic (as shown at decisional step 314), then web registry service 130 filters the identified web services 152 according to such settings at step 316. For example, the user may be an end user that would not care to see more technical results. In another example, the user may be running the query from a known Accounts Payable application, so web registry service 130 may automatically filter Order Entry web services 152. In a further example, web registry service 130 may determine that the user (or his company) has already invoked, is the developer of, or has a local copy of a particular web service 152. In this case, the particular web service 152 would be filtered from any results.

If there are any web services 152 that satisfy the results (and have not been filtered) at decisional step 318, then the first identified web service 152 is then identified at step 320. If the selected web service is not local (or its metadata not stored in a local repository) at decisional step 322, then web registry service 130 determines the logical location of the web service 152 and/or its provider 106 at step 324 and requests or retrieves any additional information from the respective provider 106 at 326. For example, this logical location may include an IP address, an absolute or relative network address or Uniform Resource Locator (URL), a customer or partner identifier, a subindex locator, or any other suitable information that would help locate remote or distributed web services 152 or their metadata. If the metadata index 140 indicates that additional material or documentation is associated with the particular web service 152 (and is accessible by the requestor) at decisional step 328, then web registry service 130 identifies the logical location of these materials at step 332. Once the particular web service 152 has been suitably processed, then web registry service 130 adds 1 to a web service counter at step 332 and, if there are more identified web services 152 at step 334, selects the next identified web service 152 at step 336, after which processing returns to step 322.

Once all of the web services 152 that satisfy the query have been identified and suitably processed, then web registry service 130 may sort the collected metadata at step 338. For example, web registry service 130 may sort, rank, or make conspicuous (such as bolded) based on a preferred provider or service, contractual obligations, popularity, name, priority, security settings, known applications, local/remote, or any other criteria. Next, at step 340, the user normally gets a clear, easy to understand list of the different web services 152 that matched that search. Simply, the user should be able to find the appropriate items from that list, if any. The results may allow the user to view the metadata or accompanying information to understand the service's business scenarios, look and feel, as well as basic technical requirements or recommendations. Also, the search results may include the community rating and reviews regarding a specific web service 152 and different layouts of the result list, each result displaying information with different look and feel. In some cases, the search results may also display "big name" customers or case histories for appropriate web services 152. At this point, the user may also refine the current search by conducting another search on the items that are presented in the result list. If the example web service counter is less than some static or dynamic threshold value at decisional step 340 (or if there where no web services that satisfied the current query at step 318), then web registry service 130 may determine one or more variations of the current query. For example, web registry service 130 may automatically determine that the search included a typo and present the modified query to the user for approval. In another example, web registry service 130 may automatically run similar, but more popular, searches to the current query.

FIG. 4 is a flowchart illustrating an example method 400 for populating a sub-index, remote index 140, or other metadata repository 250 using the system of FIG. 2B. Generally, method 400 describes web service provider 106 storing service definitions and associated metadata as the web service 152 is being published or the metadata is being filled during proxy-generation. For example, illustrated method 400 begins at step 402, where a web service 152 - relatively local to the particular web service provider 106 - is identified. This identification may occur during development, at publication, or at another suitable time. Next, web service provider 106 invokes proxy generation at step 404. At this point, the service definition, the service 152's metadata, or other web service information is stored in the local repository 250 at step 406. At step 408, web service provider 106 executes the service activation 246. Concurrently or after this activation, web service provider 106 transmits at least some metadata to a web service search entity (such as ER provider 102) at step 410. Based on this transmission, the particular web service 152 is then registered with the web service search entity at step 412. While not illustrated, this registration (and its accompanying metadata) may be automatically communicated to other web service search entities upon request or in broadcast form.

FIG. 5A illustrates an example search interface 116. In this example, the searching functionality is presented on client 104 via a web browser. GUI 116 shows two selectable tabs: Basic and Advanced. The basic search provides the user easy searching using the more common web service characteristics. For instance, the basic search may allow the user to search by Service Definition Name or by Keywords. When appropriate, GUI 116 can determine if key word searching is supported by executing a isKeywordSearchSupported() or other similar method. In the Name field, the user may input a pattern including wildcards such as "*" and "?." If the user hasn't specified any name, * may be default.

The "Advanced Search" area helps the user to add, select, or input more search criteria such as, for example, categories, physical system, technical or trade name (e.g. Service Definition Name instead of PortType QName), Interface Settings (e.g. Stateful/Stateless), logical locations (such as an absolute or relative network path), or for Service Definitions with available Service Endpoints. In order to add a new category for search, the user may be able press an "Add Category" button, which then opens a popup allowing the user to choose a specific category or category group. In order to display a list of available categories/category groups, the UI may retrieve them by invoking a getAIIERClassificationSystems() or other similar method. Based on the classification system type a different view shall be displayed for displaying the values. The values of the selected classification system may be retrieved via a getERClassificationSystem() or other similar method. In case the classification system is a group, the view is generated automatically. In case the group represents a hierarchy also, the values within the child classification systems depend on the selected parent, i.e. not all values should be displayed of a classification system but only the ones that are relevant based on the hierarchy information. The value-help for all systems in the landscape that provide service definitions can be retrieved via the getPhysicalSystems() method.

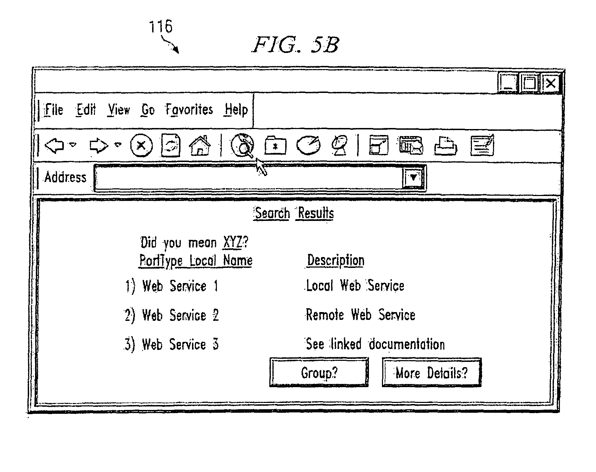

Once the user presses the "Go" button, the search is performed (or requested) and the result list is created, updated, or otherwise presented to the user or client 104 such as example GUI 116 in FIG. 5B. The search can be performed via the findServiceDefinitionsByName(), findServiceDefinitionsByKeywords(), or other similar methods, depending on the user selection. Initially, the result may display limited information such as portType local name and description of the service definition. All other attributes and taxonomies can be displayed on demand. Additionally, it should be possible to group the result list by all the available taxonomies.

The preceding flowcharts and accompanying description illustrate exemplary methods 300-400. System 100 contemplates using or implementing any suitable technique for performing these and other tasks. It will be understood that these methods are for illustration purposes only and that the described or similar techniques may be performed at any appropriate time, including concurrently, individually, or in combination. In addition, many of the steps in these flowcharts may take place simultaneously and/or in different orders than as shown. Moreover, system 100 may use methods with additional steps, fewer steps, and/or different steps, so long as the methods remain appropriate. For example, web registry service 130 may not add 1 to any web service counter (which may not exist), but may instead perform near- immediate or an initial count of web services 152 (or even use some other metric such as popularity) that satisfy the query 152 to determine if further processing should be performed.

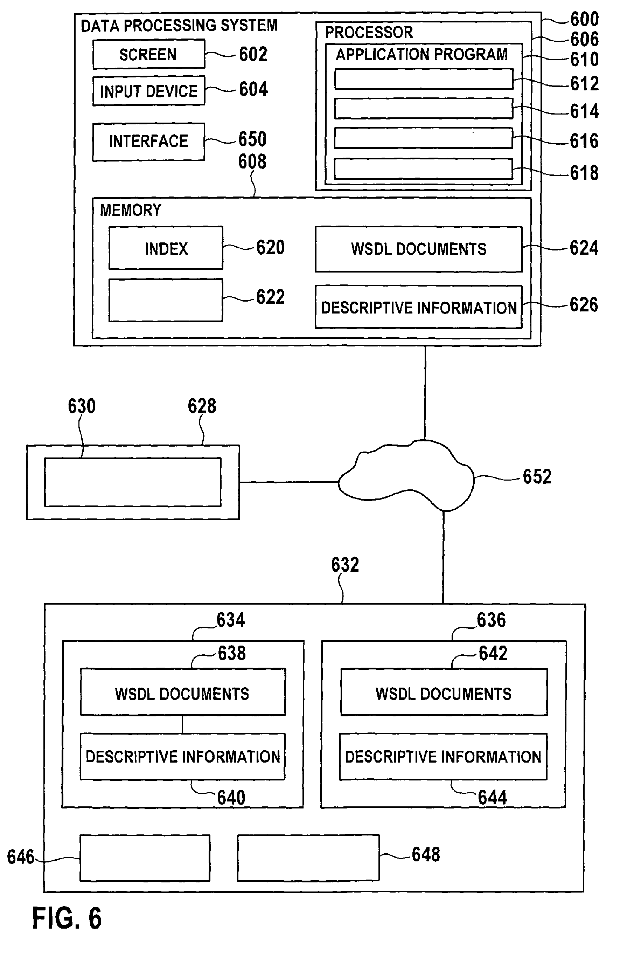

Fig. 6 shows a block diagram of an embodiment of a data processing system 600 according to the invention. The data processing system 600 comprises a computer screen 602 and an input device 604 like a keyboard, mouse, CD-ROM or DVD drive etc. The data processing system 600 further comprises a processor 606 comprising an application program 610 comprising computer executable instructions, wherein the computer executable instructions are implemented as computer program modules 612, 614, 616 and 618.

The data processing system 600 further comprises a memory 608, wherein the memory 608 can be a volatile or non-volatile memory, such as a RAM, hard disc etc. The memory 606 comprises a repository (database) comprising WSDL documents 624 and descriptive information 626 stored for at least some of the web services being described by the WSDL document 624. The memory 608 further comprises a search index 620 which was generated using the indexing module 612 by the data processing system 600 by means of the WSDL document 624 and the descriptive information 626. The memory 608 further comprises clustering information 622 which was generated by the data processing system 600 by means of the clustering module 614. Thereby, the WSDL document 624 and the descriptive information 606 were clustered by the clustering module 614. Such a clustering can for example be performed using semantic indexing and also the clustering can comprise hierarchical clustering.

The data processing system 600 is connected by means of an interface 650 to a network 652. Such a network 652 may thereby be the internet, a telecommunication network or any other kind of network known in the art. By means of the network 652, the data processing system 600 is connected to a service provider 632. More in detail, the interface 650 of the data processing system 600 is connected via the network 652 to the interface 646 of the service provider 632.

The service provider 632 comprises a remote registry 634 comprising WSDL documents 638 and descriptive information 640. Thereby, the WSDL documents 638 and the descriptive information 640 directly relate to web services 648 provided by the service provider 632. Thereby, the information comprised in the remote registry 634 is provided to the data processing system 600 in a similar organized manner as the WSDL documents 624 in the descriptive information 626 are stored in the memory 608 of the data processing system 600.

The service provider 632 further comprises a remote database 636. This remote database 636 comprises WSDL documents 642 related to the web services 648. The database further comprises descriptive information 644 related to the web services 648. However, the descriptive information 644 is not yet related to respective WSDL documents 642 in an organized and defined manner. The descriptive information 644 may be present unstructured. For example, the descriptive information 644 may comprise user manuals comprising instructions in textual form, as well as comprising multimedia information and pictorial information. Using the crawler module 616, the data processing system 600 is able to access the remote database 636. The crawler identifies the descriptive information 644 which is related for at least some of the web services 648 which itself are described in respective WSDL documents 642. The identified information comprising searchable text is transferred together with respective WSDL documents 642 via the network 652 to the memory 608. The information and the WSDL documents are processed and included in the respective repositories 624 and 626 of the data processing system 600.

The main difference between the remote registry 634 and the remote database 636 is, that in the remote registry the WSDL documents and the descriptive information are already available in a processed manner, such that said documents and information can be directly transferred and included to the repositories of the data processing system 600 comprising respective WSDL documents 624 and the descriptive information 626. In contrast, in the remote database 636 WSDL documents and descriptive information are just stored in a mainly unrelated manner. The remote database 636 has therefore to be analyzed and scanned in detail and relations between the WSDL documents 642, descriptive information 644 and respective web services 648 have to be established.

In case a client 628 sends a search query 630 for searching a web service 648 to the data processing system 600, the respective search query 630 is received by means of the interface 650 by the data processing system 600. The search module 618 is used to perform the search for identifying web services, wherein the identification is based on the search query 630 and the search index 620. After having processed the search query 630 by means of the search module 618, the data processing system 600 provides a respective search result to the client 628. Thereby, such a search result may also comprise information regarding a clustering of the identified web services. Such information regarding a clustering of identified web services is thereby being retrieved by means of the clustering information database 622.

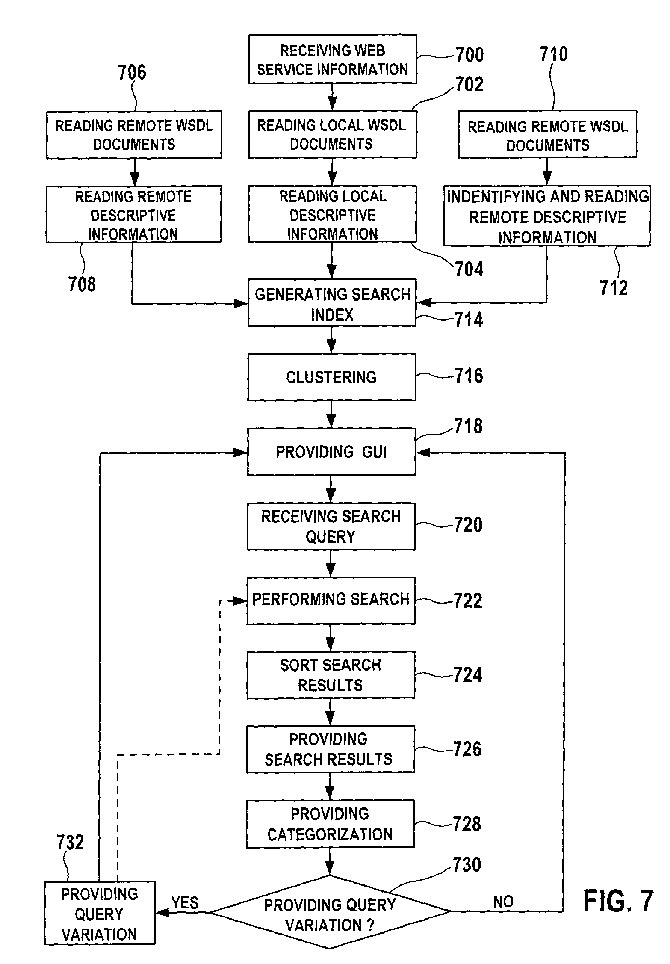

Fig. 7 shows a flowchart of a method of generating a search index for searching web services, as well as for a method for searching web services based on the method of generating a search index for searching web services. In step 700, web service information is received. Thereby, such web service information can comprise WSDL documents, as well as further descriptive information relating to web services described by the WSDL documents. Thereby, receiving the web service information in step 700 may comprise receiving a manual registration of a web service or an automatic registration of a web service, wherein in case of an automatic registration of a web service such a registration may be for example performed by a service provider by means of an application program interface (API). Such a step 700 is necessary in order to keep a local registry comprising local WSDL documents and local descriptive information up to date with respect to new and updated web services of a service provider. However, step 700 is optional since such a local registry may already be existing.

Either after step 700 or in case such a local registry is already existing, in step 702 local WSDL documents are read from the registry which is followed by step 704 where additional local descriptive information is read from the registry, wherein the descriptive information is stored for at least some of the web services described by the respective WSDL documents. This is followed by step 714, where a search index is generated using the data read in the steps 702 and 704.

Using web crawling techniques, it is also possible to read remote databases or remote registries. In case a remote registry is read, in step 706 respective remote WSDL documents are read from said remote registry and in step 708 remote descriptive information is read from said remote registry. The data gathered in the steps 706 and 708 are then used to generate the search index in step 714. Thereby, preferably the data read in the steps 706 and 708 are included in the local registry already used for steps 702 and 704 which facilitates and speeds up a further indexing process, as well as searching process in the local registry.

In case using the web crawling technique a remote database is accessed, in step 710 respective remote WSDL documents are read and in step 712 respective descriptive information is identified and read from the remote database. The identified and read descriptive information, as well as respective WSDL documents are also being transferred to the local registry and included into the local registry for generating the search index in step 714.

After step 714, additionally a categorization of the web services based on a clustering of the information contained in the WSDL documents and the descriptive information is performed. Thereby, the clustering can for example be performed using semantic clustering and the clustering may also comprise hierarchical clustering.

In step 718, a graphical user interface is presented to a client. Thereby, on a client computer such a graphical user interface may be adapted in a service consumption editor like Eclipse, SAP Workbench (SE80), SAP Visual Composer (VC) and/or a web browser and/or an applet, like a Java applet.

In step 720, a respective search query entered into the graphical user interface is received. Based on the query, as well as the search index generated in step 714, in step 722 a search for identifying web services is performed. The resulting search results are sorted in step 724. However, the sorting of the search results is optional and may be based on multiple aspects. Such aspects may comprise a sorting of search results according to popularity of the identified web services or according to information automatically gathered from the client being used to request the web service search. Such client information may concern the client's operating system, the client's service consumption editor architecture, personalized user information provided from the client like for example type of business, etc.

In step 726, the search results are provided. Optionally, in step 728 also a categorization being based on the clustering of step 716 can be provided. Such a providing of a categorization may for example be adapted as pull-down menus in the graphical user interface of the client displaying multiple options regarding a respective narrowing of the search query with respect to the displayed categories. Such a categorization may for example allow a narrowing by application area, type of business, operating system etc.

After having provided the categorization in step 708, in step 730 it is checked if a variation of the search query may be necessary. This can for example be performed by determining a count of the web services identified with the search in step 722. In case the count is below a certain threshold, an automatic identification of a variation of the query that results in a higher count of identified web services can be provided in step 732. Providing such a query variation may be for example performed by automatically spelling correction the wording originally received with the search query in step 720. Depending on the search engine architecture, step 732 can either result in an automatic re-execution of the search with step 722 using the automatically modified search query, or a search query modification can be provided to a user as a search-query modification-suggestion by performing step 718 and displaying the suggestion in the GUI.

If no query variation is necessary in step 730, the search results and the categorization results are provided using the graphical user interface in step 718. Therewith, the user has the possibility to select a certain web service from the provided list of identified web services, or further narrow down the search query by using the for example categorization results presented to the user by means of the graphical user interface in step 718.

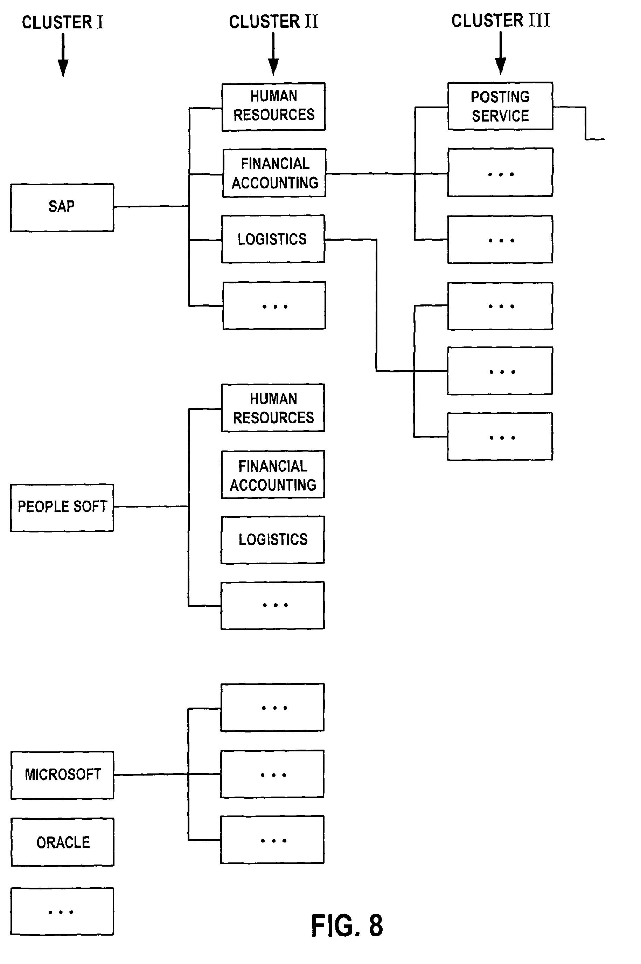

Fig. 8 shows a block diagram of an example of clustering of web services. In the example of fig. 8 the first cluster hierarchy comprises a categorization of web services with respect to operation system vendor. Continuing from each of the categories provided in "Cluster I" each category is subdivided in further categories, like for example the area of application which in the present example is for each operating system vendor "Human Resources", "Financial Accounting", "Logistics" etc. This categorization in the "Cluster II" is further continued with subdividing each of the categories with respect to services provided for each of the categories in Cluster II. In the present example this may be a "Posting Service" etc., leading to a subdivision to "Cluster III".

In a practical realization, such kind of categories that have been clustered previously can for example be provided to a graphical user interface of a client by means of drop down menus as search criteria for searching a web service. A first drop down menu may provide the list of categories in Cluster I. After having selected one of the categories in this first drop down menu, a respective list of categories is provided in a second drop down menu, wherein this respective list of categories comprises the categories of Cluster II etc.

In another possibility, the categories can be provided to a graphical user interface of a client by means of a tree structure. In the first level of the tree, the a user is provided the list of categories of Cluster 1. After having selected one of the categories, the user is provided an expanded tree structure comprising categories of Cluster II with respect to the category selected before by the user in level one etc.

Although this disclosure has been described in terms of certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure.

## Claims

1. A method of generating a search index (140; 620) for searching web services (648), a Web services Description Language (WSDL) document (624) being stored for each of the web services (152; 648) and in addition to the WSDL documents further unstructured descriptive information (626) being stored for at least some of the web services, the method comprising:
- reading the WSDL documents,
- reading the descriptive information,
- generating the search index (140; 620) using the WSDL documents and the descriptive information.

2. The method of claim 1, wherein the WSDL documents comprise only data necessary for the interoperability of the respective web service with a service consumer data processing system.

3. The method of claim 1 or 2, wherein the WSDL documents are comprised in a Universal Description, Discovery and Integration (UDDI) registry.

4. The method of any of the previous claims, wherein the descriptive information comprise metadata.

5. The method of any of the previous claims, wherein reading of the WSDL documents and reading of the descriptive information comprises reading the WSDL documents and the descriptive information from remote registries (106; 634).

6. The method of any of the previous claims, wherein the WSDL documents and/or the descriptive information are read by means of web crawling techniques.

7. The method of any of the previous claims, further comprising categorization of the web services based on a clustering of the information contained in the WSDL documents and the descriptive information.

8. The method of claim 7, wherein the clustering is performed using semantic indexing.

9. The method of claim 7 or 8, wherein the clustering comprises hierarchical clustering, the first level of hierarchy comprising categorization of the web services by interoperability with application programs, the second level of hierarchy comprising categorization of the web services by interoperability with application program modules.

10. The method of any of the previous claims, wherein the search index comprises references to the WSDL documents, logical locations of respective web services and the descriptive information stored for at least some of the web services.

11. The method of any of the previous claims, further comprising identifying the descriptive information being stored in a remote database (636) for at least some of the web services and storing at least a portion of the identified descriptive information in a local registry.

12. The method of claim 11 wherein the identification of the descriptive information being stored in a remote database is performed by means of web crawling techniques.

13. The method of any of the previous claims, wherein identifying the descriptive information being stored in the remote database for at least some of the web services is performed during a generation of a proxy, the proxy being adapted to store at least some of the descriptive information of said web services.

14. The method of any of the previous claims, further comprising receiving a manual registration of a web service, the manual registration comprising receiving manual input of information related to said web service at the local registry, the information comprising the Web services Description Language (WSDL) document and the further descriptive information of said web service.

15. The method of any of the previous claims, further comprising receiving automatically a registration of a web service, the receiving of the registration being performed by means of an Application Program Interface (API), the registration comprising receiving input of information related to said web service at the local registry, the information comprising the Web services (648) Description Language (WSDL) document and the further descriptive information of said web service.

16. A method for searching web services (648), the method comprising:
- receiving a search query (630) for searching a web service, the search query being received from a client (628),
- performing a search for identifying web services, the identification being based on the query and a search index, the search index being provided according to any of the method steps 1 to 15.

17. The method of claim 16, wherein the query comprises an unstructured query comprising a wildcard character.

18. The method of claim 16 or 17, wherein the query is received by means of a graphical user interface, the graphical user interface being adapted in a service consumption editor and/or a web browser and/or an applet.

19. The method of claim 18, further comprising providing search categories to the graphical user interface, wherein the received search query comprises search categories selected from the graphical user interface.

20. The method of any of the previous claims 16 to 19, further comprising providing a search result to the client, the search result comprising the identified web services.

21. The method of claim 20, wherein the search results are provided to the client in a sorted fashion.

22. The method of claim 20 or 21, further comprising providing information (622) regarding a clustering of the identified web services to the client.

23. The method of claim 22, further comprising receiving search result filter rules from the client based on the information regarding the clustering of the identified web services.

24. The method of claim 23, wherein the search result is filtered based on the search result filter rules.

25. The method of any of the previous claims 16 to 24, further comprising determining a count of the identified web services and if the count is below a threshold, automatically generating a variation of the query that results in a higher count of identified web services.

26. A data processing system (130; 600), the data processing system being adapted to perform a method according to any of the previous claims.

27. A computer program product (612; 614; 616; 618) comprising computer executable instructions to perform any of the previous method steps 1 to 25.
